# EUROPEAN PATENT SPECIFICATION

(11) **EP 3 989 058 B1**
(45) Date of publication and mention of the grant of the patent: **04.03.2026**
(21) Application number: 21152851.8
(22) Date of filing: 21.01.2021
(51) Int. Cl.: G06F 8/41

(54) **OPTIMIZATION METHOD AND OPTIMIZATION SYSTEM FOR COMPUTER PROGRAMMING CODE**
OPTIMIERUNGSVERFAHREN UND OPTIMIERUNGSSYSTEM FÜR COMPUTERPROGRAMMIERCODE
PROCÉDÉ D'OPTIMISATION ET SYSTÈME D'OPTIMISATION POUR CODE DE PROGRAMMATION INFORMATIQUE

(30) Priority: 23.10.2020 TW 109136869
(43) Date of publication of application: 27.04.2022
(73) Proprietor: Industrial Technology Research Institute, 310401 Hsinchu (TW)
(72) Inventor: CHANG, Jia-Rung, 407 Taichung City (TW); SU, Yi-Chiao, 360 Miaoli City, Miaoli County (TW); HSIEH, Tien-Yuan, 300 Hsinchu City (TW); YOU, Yi-Ping, 302 Zhubei City, Hsinchu County (TW)
(74) Representative: Krauns, Christian

(56) References cited:
- AMIR H ASHOURI ET AL: "A Survey on Compiler Autotuning using Machine Learning", ARXIV.ORG, CORNELL UNIVERSITY LIBRARY, 201 OLIN LIBRARY CORNELL UNIVERSITY ITHACA, NY 14853, 13 January 2018 (2018-01-13), XP081509589, DOI: 10.1145/3197978

## Description

### TECHNICAL FIELD

The disclosure relates in general to an optimization method, an optimization system for computer programming code and an electronic device using the same.

### BACKGROUND

Along with the development of software technology, various electronic devices with different functions are provided one after another. During the software development process, the programming codes need to be compiled through optimizers to remove redundant commands, such that the algorithms can be optimized, and the processing speed can be increased.

Currently, a few hundreds of optimizers regarding the optimization of programming code compiling are provided. Different optimizers have different functions. The compiling of a newly developed programming code may need several optimizers. The optimization result of an optimizer may not be applicable to all kinds of programming codes. For each programming code, a suitable optimizer collection is needed to be found. During the software development process, it is indeed a difficult task to obtain a suitable optimizer collection from tens to a few hundreds of currently available optimizers. Particularly, the optimizers are not independent and instead may interact with each other, and a set of best optimizers may not necessarily lead to the best result of optimization.

For example, among n optimizers, optimizers A, B, and C individually may not produce an optimization result on a particular programming code, but a combination of optimizers A, B, and C may produce a very good optimization result on the programming code. To select a best combination of optimizers from n optimizers, which may generate 2ⁿ possible combinations, is a complicated process known as the NP-complete problem. The publication "A Survey on Compiler Autotuning using Machine Learning", by Amir H. Ashouri et. al., in ARXIV.ORG, CORNELL UNIVERSITY LIBRARY, 201 OLIN LIBRARY CORNELL UNIVERSITY ITHACA, NY 14853, 13 January 2018 (2018-01-13),DOI: 10.1145/3197978 presents an overview of compiler autotuning techniques based on machine learning, including feature extraction and compiler sequence prediction.

### SUMMARY

The disclosure is directed to a method of an optimization method, an optimization system for computer programming code and an electronic device using the same.

The problem of the present invention is solved by an optimization method for computer programming code according to the independent claim 1 as well as by an optimization system for computer programming code according to the independent claim 7, while the dependent claims refer to further advantageous developments of the present invention.

According to the invention, an optimization method for computer programming code is provided. The optimization method includes the following steps. Several optimizers each having several branch paths are provided. A counter is set on each of the branch paths. When the optimizers run through the branch paths, the counters set on the branch paths, where the optimizers run through, are counted. The computer programming code is compiled through the optimizers. Several count values of the counters are obtained. The count values are collected to obtain a feature vector of the computer programming code.

According to the invention, an optimization system for computer programming code is provided. The optimization system for the computer programming code includes a database, a setting unit, a compiling unit, a value taking unit, a collection unit and an analysis unit. The database is configured to store several optimizers each having several branch paths. The setting unit is configured to set a counter on each of the branch paths. When the optimizers run through the branch paths, the counters set on the branch paths, where the optimizers run through, are counted. The compiling unit is configured to compile the computer programming code through the optimizers. The value taking unit is configured to obtain several count values of the counters. The collection unit is configured to collect the count values to obtain a feature vector of the computer programming code.

According to an alternative embodiment, an electronic device is provided. The electronic device includes a processor. The processor is configured to perform an optimization method for computer programming code. The processor performing includes the following steps. Several optimizers each having several branch paths are provided. A counter is set on each of the branch paths. When the optimizers run through the branch paths, the counters set on the branch path, where the optimizers run through, are counted. The computer programming code is compiled through the optimizers. Several count values of the counters are obtained. The count values are collected to obtain a feature vector of the computer programming code. The feature vector is inputted to a machine learning model to obtain an optimizer collection suitable for the computer programming code.

### BRIEF DESCRIPTION OF THE DRAWINGS

FIG. 1 is a schematic diagram of an optimization method for computer programming code according to an embodiment.
FIG. 2 is a block diagram of an optimization system for the computer programming code according to an embodiment.
FIG. 3 is a flowchart of an optimization method for the computer programming code according to an embodiment.
FIG. 4 is an example of if-else command.
FIG. 5 is an example of switch-case command.
FIG. 6 is an example of while-loop command.
FIG. 7 is an example of do-loop command.
FIG. 8 is an example of step S120.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

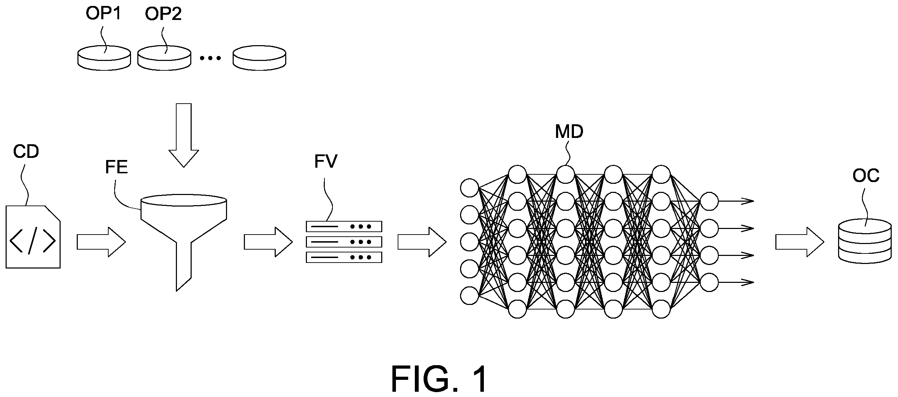

Referring to FIG. 1, a schematic diagram of an optimization method for computer programming code CD according to an embodiment is shown. In the present embodiment, a feature extraction process FE, based on the operation of all optimizers OP1, OP2, ..., etc., extracts a feature vector FV for each computer programming code CD. After the feature vector FV is extracted, an optimizer collection OC suitable for the computer programming code CD can be predicted using a machine learning model MD. The machine learning model MD can be realized by a pre-trained neural network (NN) model.

The feature extraction process FE of the computer programming code CD is special. The relation between the optimizers OP1, OP2, ..., etc. and the computer programming code CD is not obvious and requires complicated analysis and processing. Moreover, the computer programming code CD is not a linear vector, and cannot be directly used in the machine learning model MD. The format of the computer programming code CD needs to be converted using a specific method so that the computer programming code CD can be used in the machine learning model MD.

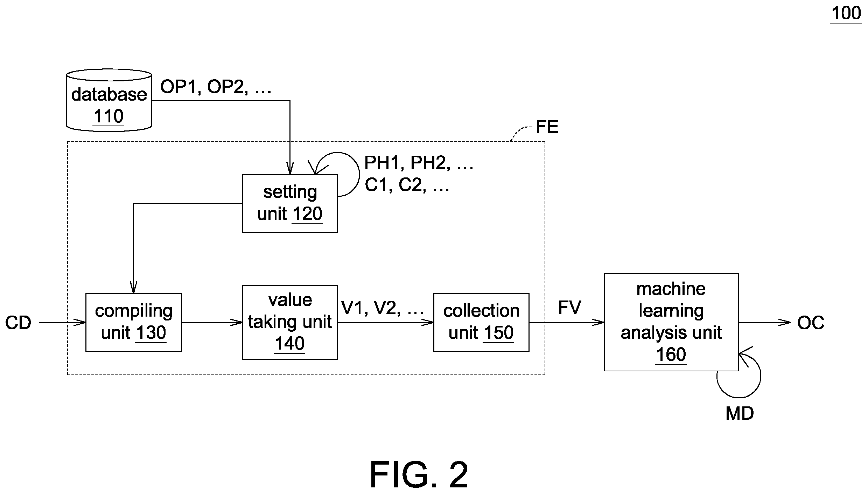

Referring to FIG. 2, a block diagram of an optimization system 100 for the computer programming code CD according to an embodiment is shown. The optimization system 100 includes a database 110, a setting unit 120, a compiling unit 130, a value taking unit 140, a collection unit 150 and a machine learning analysis unit 160. The database 110 can be realized by a memory, a hard disc or a cloud storage center. The setting unit 120, the compiling unit 130, the value taking unit 140, the collection unit 150 and the machine learning analysis unit 160 can be realized by a circuit, a circuit board or a storage device storing programming code.

The database 110 is configured to store all optimizers OP1, OP2, ..., etc. The setting unit 120, the compiling unit 130, the value taking unit 140 and the collection unit 150 are configured to perform the feature extraction process FE to extract a feature vector FV. After the feature vector FV is obtained, the machine learning analysis unit 160 can predict the optimizer collection OC suitable for the computer programming code CD using the machine learning model MD. Operations of the above elements are disclosed below with an accompanying flowchart.

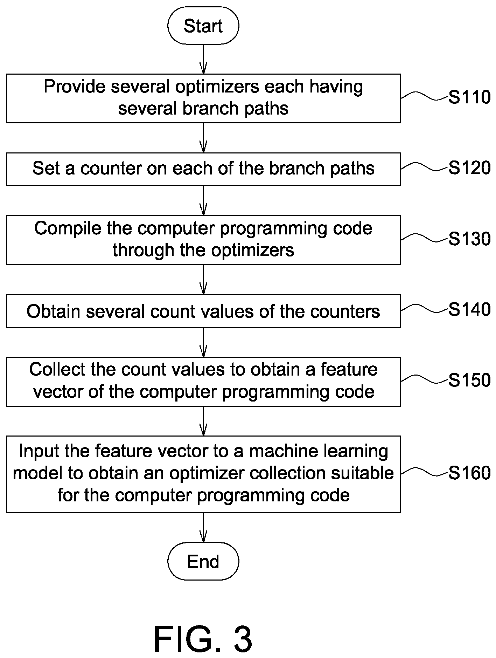

Refer to FIG. 2 and FIG. 3. FIG. 3 is a flowchart of an optimization method for the computer programming code CD according to an embodiment. The optimization method for the computer programming code CD of the present embodiment can be performed by a processor of an electronic device. The optimization method of FIG. 3 is exemplified using the optimization system 100 of FIG. 2. Firstly, the method begins at step S110 of FIG. 3, the optimizers OP1, OP2, ..., etc. are provided by the database 110, wherein each of the optimizers OP1, OP2, ..., etc. is a programming code, and the optimizers OP1, OP2, ..., etc. may contain if-else command, switch-case command, while-loop command, for-loop command, do-loop command, branch command, loop command or a combination thereof. The branch path can be realized by a two-branch path, a path with more than two branches or a loop path. All the above commands are conditional commands.

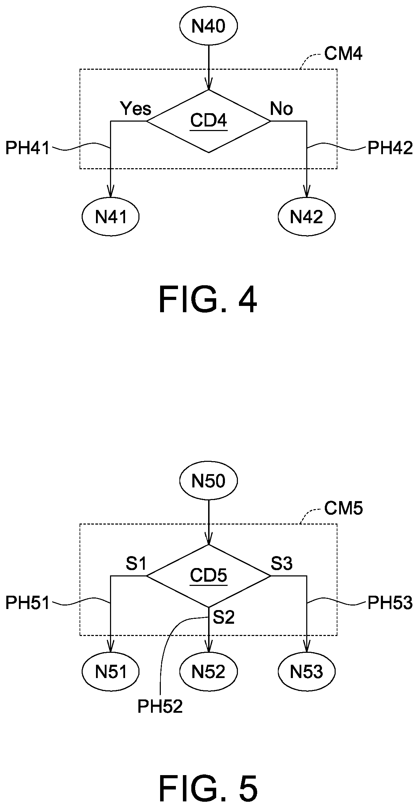

Referring to FIG. 4, an example of if-else command CM4 is shown. As indicated in FIG. 4, after exiting the node N40, the method the process performs the if-else command CM4. If the condition CD4 is met, the method enters the node N41 along the branch path PH41. If the condition CD4 is not met, the method enters the node N42 along the branch path PH42.

Referring to FIG. 5, an example of switch-case command CM5 is shown. As indicated in FIG. 5, after exiting the node N50, the process performs the switch-case command CM5. The scenario condition CD5 illustrates three scenarios S1, S2, and S3 as follows. Scenario S1: the process enters the node N51 along the branch path PH51. Scenario S2: the process enters the node N52 along the branch path PH52. Scenario S3: the process enters the node N53 along the branch path PH53. In an embodiment, the scenario condition could have two or more than four scenarios.

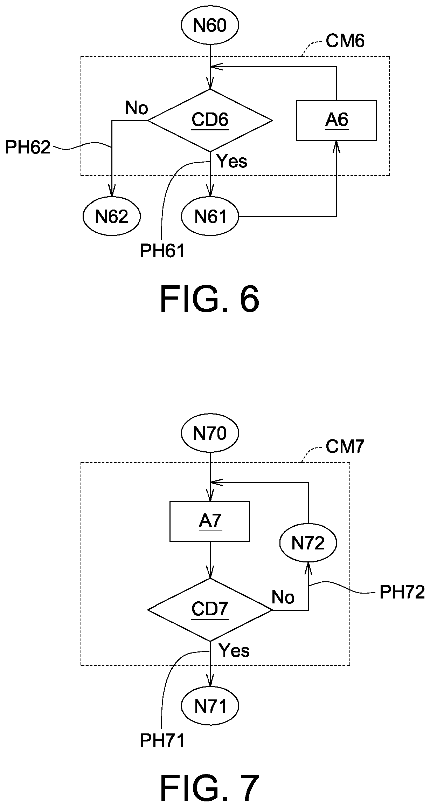

Referring to FIG. 6, an example of while-loop command CM6 is shown. As indicated in FIG. 6, after exiting the node N60, the process performs the while-loop command CM6. If the condition CD6 is met, the process enters the node N61 along the branch path PH61 to perform a particular action A6. If the condition CD6 is not met, the process enters the node N62 along the branch path PH62 to exit the loop. The for-loop command is similar to the while-loop command CM6, and the similarities are not repeated here.

Referring to FIG. 7, an example of do-loop command CM7 is shown. As indicated in FIG. 7, after exiting the node N70, the process performs the do-loop command CM7. After the action A7 is performed once, whether the condition CD7 is met is determined. If the condition CD7 is met, the process enters the node N71 along the branch path PH71 to exit the loop. If the condition CD7 is not met, the process enters the node N72 along the branch path PH72 to perform the action A7 again.

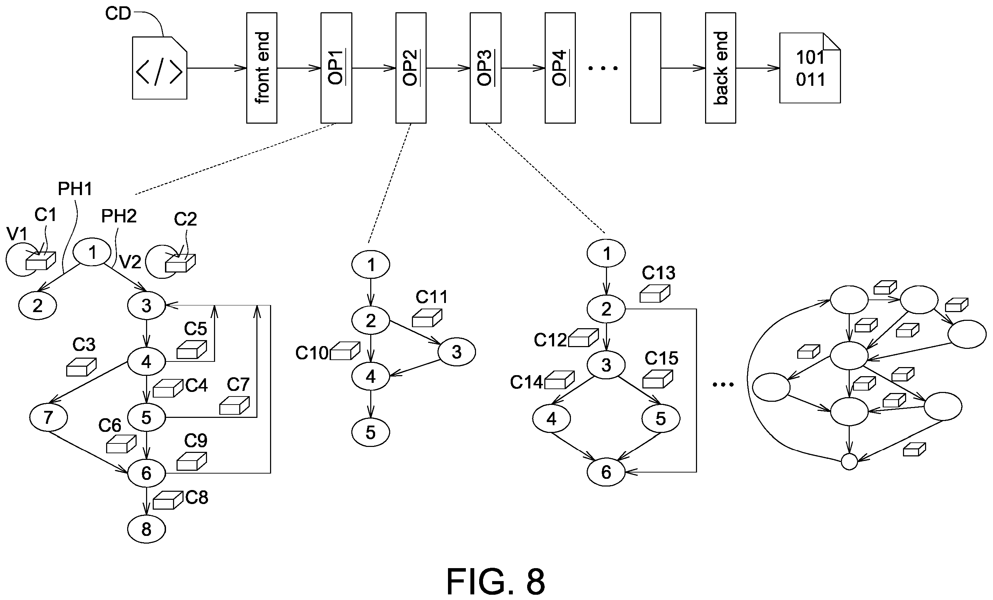

Then, the method proceeds to the step S120 of FIG. 3, counters C1, C2, ..., etc. are respectively set on the branch paths PH1, PH2, ..., etc. of the optimizers OP1, OP2, ..., etc. by the setting unit 120. Referring to FIG. 8, an example of step S120 is shown. When all of the optimizers OP1, OP2, ..., etc. are used, the optimizers OP1, OP2, OP3, OP4, ..., etc. are arranged between the front-end and the back end of the compiling process. The optimizers OP1, OP2, OP3, OP4, ..., etc. may contain if-else command, switch-case command, while-loop command, for-loop command and do-loop command and generate branch paths PH1, PH2, ..., etc. The branch paths PH1, PH2, ..., etc. can be two-branch paths or three-branch paths. In the present step, the counters C1, C2, ..., etc. are respectively set on all of the branch paths PH1, PH2, ..., etc. of all optimizers by the setting unit 120.

Then, the method proceeds to step S130 of FIG. 3, the computer programming code CD is compiled by the compiling unit 130 through the optimizers OP1, OP2, ..., etc. During the compiling process, as long as the optimizers OP1, OP2, ..., etc. run through the branch paths PH1, PH2, ..., etc., the counters C1, C2, ..., etc. set on the branch paths PH1, PH2, ..., etc. will respectively increase the count values V1, V2, ..., etc. (by 1 or 2).

Then, the process proceeds to step S140 of FIG. 3, the count values V1, V2, ..., etc. are collected by the collection unit 150 to obtain a feature vector FV. The count values V1, V2, ..., etc. are arranged as the feature vector FV of the computer programming code CD according to a predetermined order.

Referring to Table 1, the values of the feature vector FV obtained by complying a particular computer programming code CD through the optimizers OP1, OP2, ..., etc. are listed.

**Table 1**

| Count values | V1 | V2 | V3 | V4 | V5 | V6 | V7 | ... |
|---|---|---|---|---|---|---|---|---|
| Feature vector FV | 0 | 12 | 3 | 7 | 2 | 5 | 6 | ... |

Then, the method proceeds to step S150 of FIG. 3, as indicated in FIG. 1, the feature vector FV is inputted to the machine learning model MD by the machine learning analysis unit 160 to obtain the optimizer collection OC suitable for the computer programming code CD. For example, the optimizer collection OC shows that suitable optimizers include optimizers OP1, OP2, and OP4.

As disclosed in above embodiments, for each computer programming code CD, the feature vector FV can be extracted through the optimizers OP1, OP2, ..., etc. The feature vector FV represents the scenarios of operation when each computer programming code CD is compiled through the optimizers OP1, OP2, ..., etc. That is, the feature vector FV covers the composition information of the computer programming code CD as well as the composition information of the optimizers OP1, OP2, ..., etc.

After the feature vector FV is obtained, the optimizer collection OC suitable for the computer programming code CD can be predicted using the machine learning model MD. The optimization system of the present embodiment can automatically extract the feature vector FV according to the optimizers OP1, OP2, ..., etc. without relying on compiler experts' expertise of optimizers.

It will be apparent to those skilled in the art that various modifications and variations can be made to the disclosed embodiments. It is intended that the specification and examples be considered as exemplary only. The invention is defined by the appended independent claims. The dependent claims define preferred embodiments.

## Claims

1. An optimization method for computer programming code (CD), wherein the optimization method comprises:
(S110) providing a plurality of optimizers (OP1, OP2) each having a plurality of branch paths (PH1, PH2);
(S120) setting a counter (C1, C2) on each of the branch paths (PH1, PH2), wherein when the optimizers (OP1, OP2) run through the branch paths (PH1, PH2), the counters (C1, C2) set on the branch paths (PH1, PH2), where the optimizers (OP1, OP2) run through, are counted;
(S130) compiling the computer programming code (CD) through the optimizers (OP1, OP2);
(S140) obtaining a plurality of count values (V1, V2) of the counters (C1, C2);
(S150) collecting the count values (V1, V2) to obtain a feature vector (FV) of the computer programming code (CD), wherein the count values (V1, V2) are arranged as the feature vector (FV); and
(S160) obtaining an optimizer collection (OC) which includes some of the optimizers (OP1, OP2) according to the feature vector (FV).

2. The optimization method for the computer programming code (CD) according to claim 1, wherein the counters (C1, C2) are set on all of the branch paths (PH1, PH2) of the optimizers (OP1, OP2).

3. The optimization method for the computer programming code (CD) according to claim 1 or 2, wherein the branch paths (PH1, PH2) comprise paths of if-else command, switch-case command, while-loop command, for-loop command, do-loop command, branch command, loop command or a combination thereof.

4. The optimization method for the computer programming code (CD) according to anyone of the claims 1 to 3, wherein each of the branch paths (PH1, PH2) is a two-branch path, a path with more than two branches or a loop path.

5. The optimization method for the computer programming code (CD) according to anyone of the claims 1 to 4, wherein the count values (V1, V2) are arranged as the feature vector (FV) according to a predetermined order.

6. The optimization method for the computer programming code (CD) according to anyone of the claims 1 to 5, wherein the feature vector (FV) is a one-dimensional vector.

7. An optimization system (100) for computer programming code (CD), wherein the optimization system (100) comprises:
a database (110) configured to store (S110) a plurality of optimizers (OP1, OP2) each having a plurality of branch paths (PH1, PH2);
a setting unit (120) configured to set (S120) a counter (C1, C2) on each of the branch paths (PH1, PH2), wherein when the optimizers (OP1, OP2) run through the branch paths (PH1, PH2), the counters (C1, C2) set on the branch paths (PH1, PH2), where the optimizers (OP1, OP2) run through, are counted;
a compiling unit (130) configured to compile (S130) the computer programming code (CD) through the optimizers (OP1, OP2);
a value taking unit (140) configured to obtain (S140) a plurality of count values (V1, V2) of the counters (C1, C2);
a collection unit (150) configured to collect (S150) the count values (V1, V2) to obtain a feature vector (FV) of the computer programming code (CD), wherein the count values (V1, V2) are arranged as the feature vector (FV); and
an analysis unit (160) configured to obtain an optimizer collection (OC) which includes some of the optimizers (OP1, OP2) according to the feature vector (FV).

8. The optimization system (100) for the computer programming code (CD) according to claim 7, wherein the setting unit sets the counters (C1, C2) on all of the branch paths of the optimizers (OP1, OP2).

9. The optimization system (100) for the computer programming code (CD) according to claim 7 or 8, wherein the branch paths (PH1, PH2) comprise paths of if-else command, switch-case command, while-loop command, for-loop command, do-loop command, branch command, loop command or a combination thereof.

10. The optimization system (100) for the computer programming code (CD) according to anyone of the claims 7 to 9, wherein each of the branch paths (PH1, PH2) is a two-branch path, a path with more than two branches or a loop path.

11. The optimization system (100) for the computer programming code (CD) according to anyone of the claims 7 to 10, wherein the count values (V1, V2) are arranged as the feature vector (FV) according to a predetermined order.

12. The optimization system (100) for the computer programming code (CD) according to anyone of the claims 7 to 11, wherein the feature vector (FV) is a one-dimensional vector.

## Patentansprüche

1. Optimierungsverfahren für Computerprogrammcode (CD), wobei das Optimierungsverfahren umfasst:
(S110) ein Bereitstellen einer Vielzahl an Optimierern (OP1, OP2), die jeweils eine Vielzahl an Verzweigungspfaden (PH1, PH2) aufweisen;
(S120) ein Einrichten eines Zählers (C1, C2) auf jedem der Verzweigungspfade (PH1, PH2), wobei, wenn die Optimierer (OP1, OP2) die Verzweigungspfade (PH1, PH2) durchlaufen, die auf den Verzweigungspfaden (PH1, PH2) gesetzten Zähler (C1, C2), auf denen die Optimierer (OP1, OP2) durchlaufen, gezählt werden;
(S130) ein Kompilieren des Computerprogrammiercodes (CD) durch die Optimierer (OP1, OP2);
(S140) ein Ermitteln einer Vielzahl an Zählwerten (V1, V2) der Zähler (C1, C2);
(S150) ein Sammeln der Zählwerte (V1, V2), um einen Merkmalsvektor (FV) des Computerprogrammiercodes (CD) zu erhalten, wobei die Zählwerte (V1, V2) als der Merkmalsvektor (FV) angeordnet sind; und
(S160) ein Erhalten einer Optimierer-Sammlung (OC), die einige der Optimierer (OP1, OP2) nach dem Merkmalsvektor (FV) enthält.

2. Optimierungsverfahren für Computerprogrammcode (CD) nach Anspruch 1, wobei die Zähler (C1, C2) auf allen Verzweigungspfaden (PH1, PH2) der Optimierer (OP1, OP2) gesetzt sind.

3. Optimierungsverfahren für Computerprogrammcode (CD) nach Anspruch 1 oder 2, wobei die Verzweigungspfade (PH1, PH2) Pfade von if-else-Befehlen, switch-case-Befehlen, while-loop-Befehlen, for-loop-Befehlen, do-loop-Befehlen, branch-Befehlen, loop-Befehlen oder einer Kombination davon aufweisen.

4. Optimierungsverfahren für Computerprogrammcode (CD) nach einem der Ansprüche 1 bis 3, wobei jeder der Verzweigungswege (PH1, PH2) ein Zwei-Verzweigungspfad, ein Pfad mit mehr als zwei Verzweigungen oder ein Schleifenpfad ist.

5. Optimierungsverfahren für Computerprogrammcode (CD) nach einem der Ansprüche 1 bis 4, wobei die Zählwerte (V1, V2) als der Merkmalsvektor (FV) nach einer vorbestimmten Reihenfolge angeordnet sind.

6. Optimierungsverfahren für Computerprogrammcode (CD) nach einem der Ansprüche 1 bis 5, wobei der Merkmalsvektor (FV) ein eindimensionaler Vektor ist.

7. Optimierungssystem (100) für Computerprogrammcode (CD), wobei das Optimierungssystem (100) aufweist:
eine Datenbank (110), die ausgestaltet ist, um eine Vielzahl an Optimierern (OP1, OP2) zu speichern (S110), die jeweils eine Vielzahl an Verzweigungspfaden (PH1, PH2) aufweisen;
eine Einstelleinheit (120), die ausgestaltet ist, um einen Zähler (C1, C2) auf jedem der Verzweigungspfade (PH1, PH2) einzustellen (S120), wobei, wenn die Optimierer (OP1, OP2) die Verzweigungspfade (PH1, PH2) durchlaufen, die auf den Verzweigungspfaden (PH1, PH2) gesetzten Zähler (C1, C2), auf denen die Optimierer (OP1, OP2) durchlaufen, gezählt werden;
eine Kompilierungseinheit (130), die ausgestaltet ist, um den Computerprogrammcode (CD) durch die Optimierer (OP1, OP2) zu kompilieren (S130);
eine Werteerfassungseinheit (140), die ausgestaltet ist, um eine Vielzahl an Zählwerten (V1, V2) der Zähler (C1, C2) zu erfassen (S140);
eine Sammeleinheit (150), die ausgestaltet ist, um die Zählwerte (V1, V2) zu sammeln (S150), um einen Merkmalsvektor (FV) des Computerprogrammiercodes (CD) zu erhalten, wobei die Zählwerte (V1, V2) als der Merkmalsvektor (FV) angeordnet sind; und
eine Analyseeinheit (160), die ausgestaltet ist, um eine Optimierer-Sammlung (OC) zu erhalten, die einige der Optimierer (OP1, OP2) nach dem Merkmalsvektor (FV) enthält.

8. Optimierungssystem (100) für Computerprogrammiercode (CD) nach Anspruch 7, wobei die Einstelleinheit die Zähler (C1, C2) auf allen Verzweigungspfaden der Optimierer (OP1, OP2) einstellt.

9. Optimierungssystem (100) für Computerprogrammcode (CD) nach Anspruch 7 oder 8, wobei die Verzweigungspfade (PH1, PH2) Pfade von if-else-Befehlen, switch-case-Befehlen, while-loop-Befehlen, for-loop-Befehlen, do-loop-Befehlen, Verzweigungsbefehlen, Schleifenbefehlen oder einer Kombination davon aufweisen.

10. Optimierungssystem (100) für Computerprogrammiercode (CD) nach einem der Ansprüche 7 bis 9, wobei jeder der Verzweigungspfade (PH1, PH2) ein Zwei-Verzweigungspfad, ein Pfad mit mehr als zwei Verzweigungen oder ein Schleifenpfad ist.

11. Optimierungssystem (100) für Computerprogrammcode (CD) nach einem der Ansprüche 7 bis 10, wobei die Zählwerte (V1, V2) als der Merkmalsvektor (FV) nach einer vorgegebenen Reihenfolge angeordnet sind.

12. Optimierungssystem (100) für Computerprogrammcode (CD) nach einem der Ansprüche 7 bis 11, wobei der Merkmalsvektor (FV) ein eindimensionaler Vektor ist.

## Revendications

1. Procédé d'optimisation pour un code de programmation informatique (CD), dans lequel le procédé d'optimisation comprend :
(S110) la fourniture d'une pluralité d'optimiseurs (OP1, OP2) ayant chacun une pluralité de chemins de branche (PH1, PH2) ;
(S120) la mise en place d'un compteur (C1, C2) sur chacun des chemins de branche (PH1, PH2), dans lequel lorsque les optimiseurs (OP1, OP2) empruntent les chemins de branche (PH1, PH2), les compteurs (C1, C2) établis sur les chemins de branche (PH1, PH2), que les optimiseurs (OP1, OP2) empruntent, sont incrémentés;
(S130) la compilation du code de programmation informatique (CD) par l'intermédiaire des optimiseurs (OP1, OP2) ;
(S140) l'obtention d'une pluralité de valeurs de comptage (V1, V2) par les compteurs (C1, C2) ;
(S150) la collecte des valeurs de comptage (V1, V2) afin d'obtenir un vecteur de caractéristiques (FV) du code de programmation informatique (CD), dans lequel les valeurs de comptage (V1, V2) sont agencées en vecteur de caractéristiques (FV) ; et
(S160) l'obtention d'un ensemble d'optimiseurs (OC) qui inclut certains des optimiseurs (OP1, OP2) en fonction du vecteur de caractéristiques (FV).

2. Procédé d'optimisation pour le code de programmation informatique (CD) selon la revendication 1, dans lequel les compteurs (C1, C2) sont établis sur tous les chemins de branche (PH1, PH2) des optimiseurs (OP1, OP2).

3. Procédé d'optimisation pour le code de programmation informatique (CD) selon la revendication 1 ou 2, dans lequel les chemins de branche (PH1, PH2) comprennent des chemins de commande de type « *si sinon »,* de commande conditionnelle à choix multiples de type *« switch-case »,* de commande de boucle « *tant que* », de commande de boucle « *pour »,* de commande de boucle « *répéter »,* de commande de branche, de commande de boucle ou une combinaison de ceux-ci.

4. Procédé d'optimisation pour le code de programmation informatique (CD) selon l'une quelconque des revendications 1 à 3, dans lequel chacun des chemins de branche (PH1, PH2) est un chemin à deux branches, un chemin avec plus de deux branches ou un chemin de type boucle.

5. Procédé d'optimisation pour le code de programmation informatique (CD) selon l'une quelconque des revendications 1 à 4, dans lequel les valeurs de comptage (V1, V2) sont agencées pour construire le vecteur de caractéristiques (FV) selon un ordre prédéterminé.

6. Procédé d'optimisation pour le code de programmation informatique (CD) selon l'une quelconque des revendications 1 à 5, dans lequel le vecteur de caractéristiques (FV) est un vecteur unidimensionnel.

7. Système d'optimisation (100) pour un code de programmation informatique (CD), dans lequel le système d'optimisation (100) comprend :
une base de données (110) configurée pour stocker (S110) une pluralité d'optimiseurs (OP1, OP2) ayant chacun une pluralité de chemins de branche (PH1, PH2) ;
une unité de mise en place (120) configurée pour mettre en place (S120) un compteur (C1, C2) sur chacun des chemins de branche (PH1, PH2), dans lequel lorsque les optimiseurs (OP1, OP2) empruntent les chemins de branche (PH1, PH2), les compteurs (C1, C2) établis sur les chemins de branche (PH1, PH2), que les optimiseurs (OP1, OP2) empruntent, sont incrémentés ;
une unité de compilation (130) configurée pour compiler (S130) le code de programmation informatique (CD) par l'intermédiaire des optimiseurs (OP1, OP2) ;
une unité de prélèvement de valeurs (140) configurée pour obtenir (S140) une pluralité de valeurs de comptage (V1, V2) par les compteurs (C1, C2) ;
une unité de collecte (150) configurée pour collecter (S150) les valeurs de comptage (V1, V2) afin d'obtenir un vecteur de caractéristiques (FV) du code de programmation informatique (CD), dans lequel les valeurs de comptage (V1, V2) sont agencées pour construire le vecteur de caractéristiques (FV) ; et
une unité d'analyse (160) configurée pour obtenir un ensemble d'optimiseurs (OC) qui inclut certains des optimiseurs (OP1, OP2) en fonction du vecteur de caractéristiques (FV).

8. Système d'optimisation (100) pour le code de programmation informatique (CD) selon la revendication 7, dans lequel l'unité de mise en place établit les compteurs (C1, C2) sur tous les chemins de branche (PH1, PH2) des optimiseurs (OP1, OP2).

9. Système d'optimisation (100) pour le code de programmation informatique (CD) selon la revendication 7 ou 8, dans lequel les chemins de branche (PH1, PH2) comprennent des chemins de commande de type si sinon, de commande conditionnelle à choix multiples de type switch-case, de commande de boucle WHILE, de commande de boucle FOR, de commande de boucle DO, de commande de branche, de commande de boucle ou une combinaison de ceux-ci.

10. Système d'optimisation (100) pour le code de programmation informatique (CD) selon l'une quelconque des revendications 7 à 9, dans lequel chacun des chemins de branche (PH1, PH2) est un chemin à deux branches, un chemin avec plus de deux branches ou un chemin de type boucle.

11. Système d'optimisation (100) pour le code de programmation informatique (CD) selon l'une quelconque des revendications 7 à 10, dans lequel les valeurs de comptage (V1, V2) sont agencées pour construire le vecteur de caractéristiques (FV) selon un ordre prédéterminé.

12. Système d'optimisation (100) pour le code de programmation informatique (CD) selon l'une quelconque des revendications 7 à 11, dans lequel le vecteur de caractéristiques (FV) est un vecteur unidimensionnel.
